(19) Europäisches Patentamt
European Patent Office
Office européen des brevets

(11) **EP 4 280 094 A1**

(12) **DEMANDE DE BREVET EUROPEEN**

(43) Date de publication:
**22.11.2023 Bulletin 2023/47**

(21) Numéro de dépôt: **23170857.9**

(22) Date de dépôt: **28.04.2023**

(51) Classification Internationale des Brevets (IPC):
**G06F 21/72** (2013.01)     **G06F 7/58** (2006.01)
**H04L 9/08** (2006.01)

(52) Classification Coopérative des Brevets (CPC):
**G06F 21/72; G06F 7/588; H04L 9/0869;**
**H04L 9/0877;** H04L 2209/12

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **16.05.2022 FR 2204633**

(71) Demandeur: **Commissariat à l'énergie atomique et aux énergies alternatives**
**75015 Paris (FR)**

(72) Inventeurs:
• **BENEA, Licinius-Pompiliu**
**38054 GRENOBLE CEDEX 09 (FR)**

• **WACQUEZ, Romain**
**38054 GRENOBLE CEDEX 09 (FR)**
• **PEBAY-PEYROULA, Florian**
**38054 GRENOBLE CEDEX 09 (FR)**
• **PUYAL, Vincent**
**38054 GRENOBLE CEDEX 09 (FR)**
• **CARMONA, Mikael**
**38054 GRENOBLE CEDEX 09 (FR)**
• **PELISSIER, Michael**
**38054 GRENOBLE CEDEX 09 (FR)**

(74) Mandataire: **Brevalex**
**Tour Trinity**
**1 B Place de la Défense**
**92400 Courbevoie (FR)**

(54) **GENERATEUR DE NOMBRES ALEATOIRES A TRANSISTORS DOUBLE GRILLES FD-SOI LVT POLARISES EN MODE FBB**

(57)     Générateur de nombres aléatoires comportant au moins un oscillateur en anneau (104) comprenant au moins un inverseur (112.1 - 112.n) formé par au moins deux transistors (116.1, 117.1) FDSOI LVT, l'un étant de type NMOS et l'autre étant de type PMOS, caractérisé en ce qu'il comporte en outre un circuit (128) d'application de tensions sur des grilles arrière des transistors (116.1, 117.1) configuré pour polariser les transistors (116.1, 117.1) en mode FBB.

**Fig. 2**

EP 4 280 094 A1

## Description

## DOMAINE TECHNIQUE

L'invention concerne le domaine des générateurs de nombres aléatoires (ou TRNG pour « True Random Number Generator » en anglais), appliqué avantageusement au domaine de la cryptographie.

## ÉTAT DE LA TECHNIQUE ANTÉRIEURE

Dans le domaine de la cryptographie, un TRNG est un circuit fondamental utilisé dans de nombreuses primitives cryptographiques (génération de clés de session, signature numérique, masquage, etc.). Il assure le caractère imprédictible des sorties de la primitive. L'imprédictibilité est un des mécanismes garantissant le niveau de sécurité d'une primitive cryptographique.

Un TRNG est composé de trois blocs principaux :

-　une source d'entropie numérisée, qui forme une source d'aléa physique échantillonnée ;
-　un circuit de post-traitement, servant, par exemple, à augmenter le débit de la source d'entropie ou à corriger certains biais via, notamment, l'utilisation d'un générateur de nombres pseudo-aléatoires (ou PRNG pour « PseudoRandom Number Generator » en anglais) ;
-　un circuit de test embarqué destiné à détecter une anomalie dans le fonctionnement du TRNG et à remonter des alertes à un circuit de commande du TRNG.

La source d'entropie du TRNG peut être réalisée à partir d'un oscillateur en anneau (ou RO pour « Ring Oscillator » en anglais). Il est fréquent que la source d'entropie soit formée de plusieurs RO fonctionnant en parallèle et dont les sorties numérisées sont appliquées sur des entrées d'un circuit OU-Exclusif (XOR) afin d'obtenir en sortie de ce XOR une série unique de bits de valeurs aléatoires. Le rôle du XOR est d'améliorer le biais et la corrélation de chaque série de bits issue de chaque RO, pris indépendamment. Le nombre de RO reliés en parallèle est dimensionné pour que l'aléa généré soit conforme aux standards attendus.

Un RO est composé d'un ou plusieurs inverseurs (en nombre impair), chacun composé d'un transistor NMOS et d'un transistor PMOS. Tous les inverseurs sont reliés à une même tension d'alimentation $V_{DD}$ et à la masse GND.

Dans le cas d'un TRNG réalisé à partir d'un ou plusieurs RO, la source d'aléa du TRNG est la gigue (« jitter » en anglais) du ou des RO, c'est-à-dire l'écart entre la période théorique et la période réelle du signal de sortie du ou de chaque RO.

En pratique, la gigue est un aléa composé de plusieurs sources de bruits dont les deux prépondérants sont le bruit thermique et le bruit de scintillation (ou bruit « flicker »). Le bruit thermique est parfaitement blanc, c'est-à-dire non corrélé, et contribue donc à la génération d'un aléa parfaitement imprédictible. A l'inverse, le bruit de scintillation est un bruit auto-corrélé qui induit de la prédictibilité dans la gigue.

Plusieurs contraintes récentes s'appliquant à la cryptographie impactent la conception des TRNG. Par exemple, l'utilisation de TRNG dans le domaine de la cryptographie légère (internet des objets, ou IoT pour « Internet of Things » en anglais) impose une plus grande connectivité et une plus faible consommation électrique des TRNG. L'augmentation des attaques, en nombre et en puissance, accroît également l'exigence sur la qualité des TRNG. Enfin, l'utilisation de l'informatique quantique pour la cryptographie laisse envisager l'émergence de systèmes cryptographiques aux contraintes plus importantes.

A ce jour, afin que l'aléa généré soit conforme aux standards attendus (typiquement une entropie supérieure à 0,997 selon les standards de l'AIS31 définis par bureau fédéral allemand pour la sécurité des informations (BSI)), la solution consiste à utiliser un nombre total de RO dans un TRNG qui soit suffisant pour passer ces standards. Cette solution n'est toutefois pas satisfaisante compte tenu des contraintes récentes exposées précédemment. Un modèle physique décrivant statistiquement le fonctionnement du TRNG est requis.

## EXPOSÉ DE L'INVENTION

Un but de la présente invention est de proposer un générateur de nombres aléatoires, ou TRNG, présentant une meilleure évaluation de l'entropie qui est calculée à partir de la composante thermique seule de la gigue, les autres sources de bruit introduisant des erreurs dans le calcul de l'entropie.

Pour cela, l'invention propose un générateur de nombres aléatoires, ou TRNG, comportant au moins un oscillateur en anneau comprenant au moins un inverseur formé par au moins deux transistors FD-SOI (« Fully Depleted Silicon-On-Insulator » en anglais, ou entièrement ou complètement déplété, sur silicium sur isolant) LVT (« Low Voltage Threshold » en anglais, ou à faible tension de seuil), l'un étant de type NMOS et l'autre étant de type PMOS, comportant en outre un circuit d'application de tensions sur des grilles arrière des transistors configuré pour polariser les transistors en mode FBB (« Forward Body Bias » en anglais, ou polarisation directe des caissons).

La polarisation directe des caissons des transistors du RO du TRNG selon l'invention permet d'abaisser la tension de seuil de ces transistors. Or, de manière surprenante et non-évidente, cet abaissement de la tension de seuil des transistors se traduit par une diminution du bruit de scintillation, ou de scintillement, pour un même nombre de périodes, ce qui entraine un déplacement du point où la proportion du bruit thermique est maximale vers un nombre de période plus grand. Cela a pour conséquence d'augmenter la qualité du calcul de l'entropie du signal délivré par le RO pour un nombre donné d'oscillations, ou de changement de valeurs, de ce signal.

Les transistors de type FD-SOI sont réalisés dans un substrat de type FD-SOI ayant la particularité d'avoir une couche superficielle de silicium dans laquelle le canal de conduction et les régions de source et de drain des transistors sont formés, une épaisseur finale de ce canal étant comprise entre environ 5 nm et 10 nm. Le substrat de type FD-SOI comporte également une couche diélectrique enterrée, ou BOX (« Buried Oxide » en anglais), dont l'épaisseur est par exemple comprise entre environ 10 nm et 145 nm.

Les transistors sont de type LVT, c'est-à-dire sont tels que le ou les transistors de type NMOS comportent, en face arrière et en contact avec le BOX, un caisson de semi-conducteur dopé n formant la ou les grilles arrière de ces transistors, et que le ou les transistors de type PMOS comportent, en face arrière et en contact avec le BOX, un caisson de semi-conducteur dopé p formant la ou les grilles arrière de ces transistors.

La polarisation des transistors en mode FBB signifie que les transistors sont polarisés, sur leur grille arrière, tels que la tension de polarisation appliquée sur la grille arrière du transistor NMOS, ou de chaque transistor NMOS, soit positive et que la tension de polarisation appliquée sur la grille arrière du transistor PMOS, ou de chaque transistor PMOS, soit négative.

Le TRNG selon l'invention peut être utilisé dans divers domaines, notamment celui de la cryptographie embarquée, par exemple dans le domaine de la défense, de l'industrie, de l'électronique grand public, etc.

Dans un mode de réalisation avantageux, le générateur de nombres aléatoires peut comporter en outre un circuit de détection du maximum du bruit thermique présent dans une gigue d'un signal de sortie de l'oscillateur en anneau par rapport au bruit de scintillation et au bruit de quantification présents dans la gigue du signal de sortie de l'oscillateur en anneau, configuré pour mettre en oeuvre les étapes suivantes :

- calcul d'une variance d'Allan V des temps de la montée ou de la descente du signal de sortie de l'oscillateur en anneau en fonction de la taille d'un échantillon mesuré correspondant à un nombre d'oscillations N du signal de sortie de l'oscillateur en anneau ;
- calcul d'une approximation quadratique $V_{app}$ de la variance d'Allan V précédemment calculée, sous la forme d'une équation de type $V_{app} = a_0 + a_1.N + a_2.N^2$ ;

- calcul d'un nombre d'oscillations $N_{th\_max}$ du signal de sortie de l'oscillateur en anneau pour lequel le bruit thermique de la gigue dudit signal de sortie est maximisé par rapport au bruit de scintillation et au bruit de quantification de la gigue dudit signal de sortie, tel que $N_{th\_max} = \sqrt{a_0/a_2}$ ;
- commande de l'oscillateur en anneau tel que le nombre d'oscillations du signal de sortie de l'oscillateur en anneau soit égal à $N_{th\_max}$.

De manière avantageuse, le circuit d'application de tensions sur les grilles arrière des transistors peut être configuré pour appliquer, sur la grille arrière du transistor PMOS, une tension de polarisation de valeur opposée à celle appliquée sur la grille arrière du transistor NMOS.

De manière avantageuse, le circuit d'application de tensions sur les grilles arrière des transistors peut être configuré pour appliquer, sur la grille arrière du transistor NMOS, une tension de polarisation de valeur égale à une valeur limite maximale supportée par le transistor NMOS, et sur la grille arrière du transistor PMOS, une tension de polarisation de valeur égale à une valeur limite minimale supportée par le transistor PMOS.

**BRÈVE DESCRIPTION DES DESSINS**

La présente invention sera mieux comprise à la lecture de la description d'exemples de réalisation donnés à titre purement indicatif et nullement limitatif en faisant référence aux dessins annexés sur lesquels :

- la figure 1 représente schématiquement des blocs composant un générateur de nombres aléatoires selon un mode de réalisation particulier de l'invention ;
- la figure 2 représente schématiquement un exemple de réalisation d'un oscillateur en anneau et d'autres circuits du générateur de nombres aléatoires selon l'invention ;
- la figure 3 représente schématiquement deux transistors CMOS double grilles FDSOI LVT formant un étage inverseur de l'oscillateur en anneau du générateur de nombres aléatoires selon l'invention ;
- la figure 4 représente des courbes de la variance d'Allan de la gigue du signal de sortie d'un exemple de réalisation de l'oscillateur en anneau du générateur de nombres aléatoires en fonction du nombre d'oscillations de ce signal pour différentes tensions appliquées sur la grille arrière des transistors de l'oscillateur de anneau ;
- la figure 5 représente la proportion de bruit thermique par rapport aux autres bruits dans la gigue du signal de sortie d'un exemple de réalisation de l'oscillateur en anneau du générateur de nombres aléatoires en fonction du nombre d'oscillations de ce signal.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE REALISATION PARTICULIERS

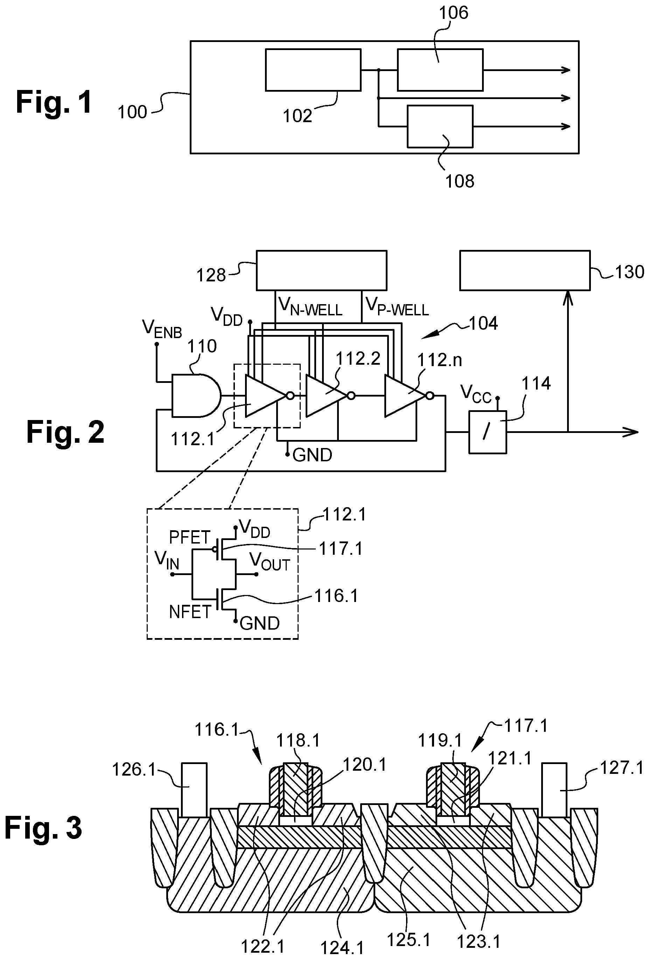

Un générateur de nombres aléatoires, TNRG, 100 selon un mode de réalisation particulier est décrit ci-dessous en lien avec la figure 1.

Le TRNG 100 comporte un premier circuit 102 formant une source d'entropie numérisée, c'est-à-dire une source d'aléa physique échantillonnée. Ce premier circuit 102 comporte au moins un oscillateur en anneau, RO, 104. Lorsque le premier circuit 102 comporte plusieurs RO 104 fonctionnant en parallèle, les sorties numérisées des RO 104 sont appliquées préférablement sur des entrées d'un circuit OU-Exclusif (XOR) afin d'obtenir en sortie de ce XOR une unique série de bits de valeurs aléatoires.

Le TRNG 100 comporte également un circuit de post-traitement 106 recevant en entrée le signal délivré en sortie du premier circuit 102 et servant à augmenter le débit ou à modifier la sortie de la source d'entropie. Le circuit 106 comporte par exemple un PRNG.

Le TRNG 100 comporte également un circuit de test embarqué 108 recevant en entrée le signal délivré en sortie du premier circuit 102 et destiné à détecter une anomalie dans le fonctionnement du TRNG 100 et à délivrer en sortie d'éventuels signaux d'alerte.

Des détails de réalisation des circuits 106 et 108 sont par exemple décrits dans le document W. Killmann et al., AIS20/AIS31. « A Proposal for: Functionality Classes for Random Number Generators", version 2.0.

Un exemple de réalisation du RO 104, ou de l'un des RO 104, du TRNG 100 est décrit ci-dessous en lien avec la figure 2.

Dans cet exemple, le RO 104 comporte une porte ET 110 dotée d'une première entrée sur laquelle une tension de fonctionnement $V_{ENB}$ de valeur correspondant à celle d'un état logique « 1 » est appliquée. La sortie de la porte ET 110 est couplée à l'entrée d'au moins un inverseur. Sur l'exemple de la figure 2, la sortie de la porte ET 110 est couplée à l'entrée d'un premier inverseur 112.1 faisant partie d'une chaîne de n inverseurs couplés en série les uns aux autres, n correspondant à un nombre impair. Sur l'exemple de la figure 2, le deuxième inverseur 112.2 et le dernier inverseur 112.n de cette chaîne sont également représentés. La sortie du dernier inverseur 112.n est couplée à une deuxième entrée de la porte ET 110 qui réalise ainsi le bouclage du RO 104. Lorsque le RO comporte un unique inverseur, la sortie de cet unique inverseur est couplée à la deuxième entrée de la porte ET 110.

Sur l'exemple de réalisation de la figure 2, le RO 104 comporte également un diviseur de fréquence 114 comprenant une entrée couplée à la sortie du dernier inverseur 112.n (ou de l'unique inverseur si le RO 104 ne comporte qu'un seul inverseur). La sortie du diviseur de fréquence 114 forme la sortie du RO 104. Ce diviseur de fréquence 114 permet de faire l'acquisition de la tension de sortie du dernier inverseur 112.n (ou de l'unique inverseur) sur des fréquences plus basses que la fréquence naturelle du signal délivré en sortie du dernier inverseur 112.n (ou de l'unique inverseur) du RO 104.

En variante, le RO 104 peut ne pas comporter la porte ET 100 et/ou le diviseur de fréquence 114. Ainsi, le RO 104 peut être formé par au moins un inverseur 112. En outre, il est également possible que le RO 104 comporte une ou plusieurs lignes de retard remplaçant un ou plusieurs des étages inverseurs, ou que le RO 104 comporte une porte NON ET couplée un nombre pair d'étages inverseur et/ou de lignes de retard.

L'inverseur ou chacun des inverseurs du RO 104 est formé par au moins deux transistors CMOS double grilles FD-SOI LVT destinés à être polarisés en mode FBB lors du fonctionnement du TRNG 100. La figure 2 représente schématiquement les transistors formant le premier inverseur 112.1 (les autres inverseurs 112.2 et 112.n étant ici formés par des transistors identiques à ceux formant le premier inverseur 112.1). Le transistor NMOS du premier inverseur 112.1 est désigné par la référence 116.1 et le transistor PMOS est désigné par la référence 117.1. Tous les inverseurs (et donc tous les transistors formant ces inverseurs) sont reliés à une même tension d'alimentation $V_{DD}$ et la masse GND. Les grilles arrière des transistors MOSFET formant les inverseurs sont pilotées par des tensions $V_{N-WELL}$ et $V_{P-WELL}$ appliquées sur celles-ci.

La figure 3 représente schématiquement une vue de profil des deux transistors 116.1, 117.1 formant le premier inverseur 112.1. Chacun de ces transistors 116.1, 117.1 comporte une grille 118.1, 119.1, une région de canal 120.1, 121.1 et des régions de source et de drain 122.1, 123.1 (dopées N pour le transistor NMOS 116.1 et dopées P pour le transistor PMOS 117.1). Ces transistors 116.1, 117.1 étant de type FD-SOI, les régions de canal 120.1, 121.1 et les régions de source et de drain 122.1, 123.1 sont formées dans la couche superficiel de semi-conducteur du substrat FD-SOI dans lequel ces transistors 116.1, 117.1 sont réalisés. Chacun des transistors 116.1, 117.1 comporte une grille arrière formée par une région de semi-conducteur dopée 124.1, 125.1 formée sous la couche diélectrique enterrée du substrat FD-SOI. Les transistors 116.1, 117.1 étant réalisés dans une configuration LVT, la région 124.1 formant la grille arrière du transistor NMOS 116.1 est dopée N, et la région 125.1 formant la grille arrière du transistor PMOS 117.1 est dopée P. Chacun des transistors 116.1, 117.1 comporte également un contact de grille arrière 126.1, 127.1 permettant d'appliquer les tensions $V_{N-WELL}$ et $V_{P-WELL}$ respectivement sur les régions 124.1, 125.1.

Le TRNG 100 comporte également un circuit 128 d'application des tensions $V_{N-WELL}$ et $V_{P-WELL}$ sur les contacts de grille arrière 126.1, 127.1 des transistors 116.1, 117.1, configuré pour polariser les transistors 116.1, 117.1 en mode FBB. Ce circuit 128 est visible sur la figure 2. Une telle polarisation des transistors 116.1, 117.1 permet d'abaisser leur tension de seuil, augmentant ainsi les performances du RO 104 en augmentant sa fréquence d'oscillation.

De manière avantageuse, le circuit 128 est configuré pour appliquer, sur la grille arrière du transistor PMOS 117.1, une tension de polarisation de valeur opposée à celle appliquée sur la grille arrière du transistor NMOS 116.1. De manière avantageuse, ces tensions de polarisation ont des valeurs égales à des valeurs limites maximales (pour le transistor NMOS) et minimales (pour le transistor PMOS) supportées par les transistors 116.1, 117.1. Par exemple, la tension $V_{N-WELL}$ est égale à 1,8 V et la tension $V_{P-WELL}$ est égale à -1,8 V. En outre, les valeurs des tensions $V_{N-WELL}$ et $V_{P-WELL}$ sont choisies telles que $V_{N-WELL} - V_{P-WELL} > -0,6$ V afin de ne pas rendre passante la diode formée entre les régions dopées 124.1 et 125.1, et telles que $V_{N-WELL} - V_{P-WELL} < 6$ V afin ne pas déclencher l'effet de claquage de cette diode.

Le TRNG 100 comporte également un circuit 130 de détection du maximum du bruit thermique présent dans la gigue du signal de sortie du RO 104 par rapport au bruit de scintillation et au bruit de quantification présents dans la gigue du signal de sortie du RO 104.

Le circuit 130 calcule une variance d'Allan V des temps de la montée ou de la descente (également appelés « temps de flip ») du signal délivré en sortie du RO 104 en fonction de la taille de l'échantillon mesuré, c'est-à-dire du nombre d'oscillations N du signal de sortie. La variance V calculée correspond à une variance d'Allan, comme par exemple décrit dans le document de P. Haddad et al., « On the assumption of mutual independence of jitter realizations in P-TRNG stochastic models. », Proceedings of Design, Automation and Test in Europe DATE 2014, Mar 2014, Dresden, Germany. pp.1-6, ou bien encore dans le document E.N. Allini et al., « Evaluation and monitoring of free running oscillators serving as source of Randomness », IACR Transactions on Cryptographie Hardware and Embedded Systems I, 2018, Issue 3, pp. 214-242.

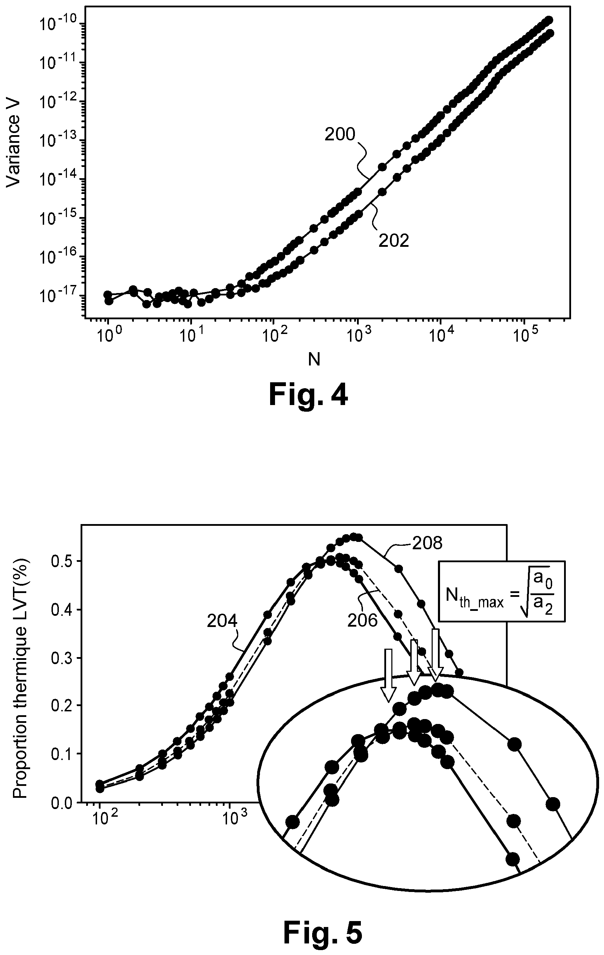

La courbe 200 visible sur la figure 4 représente la variance d'Allan V calculée lorsque $V_{N-WELL} = V_{P-WELL} = 0$ V, et la courbe 202 représente cette même variance d'Allan V lorsque $V_{N-WELL} = 2$ V et que $V_{P-WELL} = -2$ V.

La variance d'Allan V calculée dépend de manière significative des paramètres caractéristiques du bruit thermique, du bruit de quantification et du bruit de scintillement présents dans la gigue du signal de sortie du RO 104. En effet, cette variance d'Allan V est quadratique en fonction de la taille de l'échantillon mesuré (c'est-à-dire du nombre d'oscillations du signal de sortie du RO 104 considéré). Dans cette variance d'Allan V, la composante linéaire correspond au bruit thermique, la composante quadratique correspond au bruit de scintillation, et la composante constante correspond au bruit de quantification (le plancher de bruit). Par conséquent, en estimant les coefficients de ces composantes de la variance d'Allan V calculée, il est possible d'en déduire la proportion entre les bruits de scintillation, de quantification et thermique dans la gigue du signal de sortie du RO 104.

Ainsi, à partir de la variance d'Allan V précédemment calculée, le circuit 130 calcule ensuite une approximation quadratique, appelée $V_{app}$, de la variance d'Allan V précédemment calculée, sous la forme d'une équation de type $V_{app} = a_0 + a_1.N + a_2.N^2$. Dans cette équation, le terme $a_0$ est représentatif du bruit de quantification, le terme $a_1$ est représentatif du bruit thermique, et le terme $a_2$ est représentatif du bruit de scintillation.

Pour déterminer le nombre d'oscillations du signal de sortie du RO 104 pour lequel le bruit thermique est maximisé par rapport au bruit de scintillation et au bruit de quantification, le circuit 130 calcul le nombre d'oscillations $N_{th\_max}$ du RO 104 tel que

$$N_{th\_max} = \sqrt{a_0 / a_2}$$

En faisant fonctionner ensuite le RO 104 tel que le signal de sortie du RO 104 comporte un nombre d'oscillations $N = N_{th\_max}$, la contribution du bruit thermique dans la gigue du signal généré par le RO 104 est maximisé par rapport aux bruits de scintillation et de quantification, ce qui permet de garantir une plus grande entropie du TRNG 100. Lorsque N est inférieur à $N_{th\_max}$, plus N diminue, plus le bruit de quantification devient important par rapport au bruit thermique. Lorsque N est supérieur à $N_{th\_max}$, plus N augmente, plus le bruit de scintillation devient important par rapport au bruit thermique.

Les courbes 204, 206 et 208 visibles sur la figure 5 représentent, pour des tensions de grille arrière $V_{N-WELL}$ et $V_{P-WELL}$ égales à 0 V (courbe 204), égales à 1 V et -1 V (courbe 206) et égales à 2 V et -2 V (courbe 208), la proportion du bruit thermique parmi l'ensemble du bruit du signal généré par le RO 104. Sur ces courbes, le calcul de $N = N_{th\_max}$ pour chacune de ces trois configurations correspond à la valeur de N pour laquelle le sommet de chacune de ces courbes est atteint (avec une proportion de bruit thermique d'environ 50 %).

En variante de l'exemple de réalisation décrit ci-dessus, lorsque le RO 104 comporte une chaîne d'un nombre impair d'inverseurs couplés en série, il est possible qu'un ou plusieurs inverseurs de cette chaîne soit chacun remplacé par un autre circuit électronique réalisant une fonction inverseuse du signal appliqué sur son entrée. Par contre, au moins un des inverseurs de cette chaîne est formé par au moins deux transistors CMOS double grilles FDSOI LVT destinés à être polarisés en mode FBB comme décrit précédemment.

## Revendications

1. Générateur de nombres aléatoires (100) comportant au moins un oscillateur en anneau (104) comprenant au moins un inverseur (112.1- 112.n) formé par au moins deux transistors (116.1, 117.1) FDSOI LVT, l'un étant de type NMOS et l'autre étant de type PMOS, **caractérisé en ce qu'**il comporte en outre un circuit (128) d'application de tensions sur des grilles arrière (124.1, 125.1) des transistors (116.1, 117.1) configuré pour polariser les transistors (116.1, 117.1) en mode FBB.

2. Générateur de nombres aléatoires (100) selon la revendication 1, comportant en outre un circuit (130) de détection du maximum du bruit thermique présent dans une gigue d'un signal de sortie de l'oscillateur en anneau (104) par rapport au bruit de scintillation et au bruit de quantification présents dans la gigue du signal de sortie de l'oscillateur en anneau (104), configuré pour mettre en oeuvre les étapes suivantes :

   - calcul d'une variance d'Allan V des temps de la montée ou de la descente du signal de sortie de l'oscillateur en anneau (104) en fonction de la taille d'un échantillon mesuré correspondant à un nombre d'oscillations N du signal de sortie de l'oscillateur en anneau(104);
   - calcul d'une approximation quadratique $V_{app}$ de la variance d'Allan V précédemment calculée, sous la forme d'une équation de type $V_{app} = a_0 + a_1.N + a_2.N^2$ ;
   - calcul d'un nombre d'oscillations $N_{th\_max}$ du signal de sortie de l'oscillateur en anneau (104) pour lequel le bruit thermique de la gigue dudit signal de sortie est maximisé par rapport au bruit de scintillation et au bruit de quantification de la gigue dudit signal de sortie, tel que

   $$N_{th\_max} = \sqrt{a_0 / a_2} \; ;$$

   - commande de l'oscillateur en anneau (104) tel que le nombre d'oscillations du signal de sortie de l'oscillateur en anneau (104) soit égal à $N_{th\_max}$.

3. Générateur de nombres aléatoires (100) selon l'une des revendications précédentes, dans lequel le circuit (128) d'application de tensions sur les grilles arrière (124.1, 125.1) des transistors (116.1, 117.1) est configuré pour appliquer, sur la grille arrière (125.1) du transistor PMOS (117.1), une tension de polarisation de valeur opposée à celle appliquée sur la grille arrière (124.1) du transistor NMOS (116.1).

4. Générateur de nombres aléatoires (100) selon la revendication 3, dans lequel le circuit (128) d'application de tensions sur les grilles arrière (124.1, 125.1) des transistors (116.1, 117.1) est configuré pour appliquer, sur la grille arrière (124.1) du transistor NMOS (116.1), une tension de polarisation de valeur égale à une valeur limite maximale supportée par le transistor NMOS (116.1), et sur la grille arrière (125.1) du transistor PMOS (117.1), une tension de polarisation de valeur égale à une valeur limite minimale supportée par le transistor PMOS (117.1).

## Fig. 1

## Fig. 2

$V_{ENB}$ 110 $V_{DD}$ $V_{N\text{-}WELL}$ $V_{P\text{-}WELL}$ 104 128 130

112.1 112.2 112.n $V_{CC}$ 114

GND

### 112.1

PFET $V_{DD}$ 117.1
$V_{IN}$ $V_{OUT}$
NFET 116.1
GND

## Fig. 3

126.1 116.1 118.1 120.1 119.1 117.1 121.1 127.1

122.1 124.1 125.1 123.1

**Fig. 4**

$$N_{th\_max} = \sqrt{\frac{a_0}{a_2}}$$

**Fig. 5**

**EP 4 280 094 A1**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SCHRAMME MAXIME ET AL: "Comprehensive Analytical Comparison of Ring Oscillators in FDSOI Technology: Current Starving Versus Back-Bias Control", IEEE TRANSACTIONS ON CIRCUITS AND SYSTEMS I: REGULAR PAPERS, IEEE, US, vol. 69, no. 5, 1 février 2022 (2022-02-01), pages 1883-1895, XP011906716, ISSN: 1549-8328, DOI: 10.1109/TCSI.2022.3144527 [extrait le 2022-02-01] | 1,3,4 | INV. G06F21/72 G06F7/58 H04L9/08 |
| Y | * II Ring Oscillator Architectures * ----- | 2 | |
| Y | Noumon Allini Elie ET AL: "Evaluation and monitoring of free running oscillators serving as source of randomness", IACR transactions on cryptographic hardware and embedded systems, 1 septembre 2018 (2018-09-01), pages 214-242., XP093007447, DOI: 10.13154/tches.v2018.i3.214-242 Extrait de l'Internet: URL:https://tches.iacr.org/index.php/TCHES /article/view/7274/6452 [extrait le 2022-12-13] * page 1884 * ----- | 2 | DOMAINES TECHNIQUES RECHERCHES (IPC) G06F H04L |

Le présent rapport a été établi pour toutes les revendications

| Lieu de la recherche | Date d'achèvement de la recherche | Examinateur |
|---|---|---|
| Munich | 20 septembre 2023 | Chabot, Pedro |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **W. KILLMANN et al.** A Proposal for: Functionality Classes for Random Number Generators. *AIS20/AIS31*
- **P. HADDAD et al.** On the assumption of mutual independence of jitter realizations in P-TRNG stochastic models. *Proceedings of Design, Automation and Test in Europe DATE 2014,* Mars 2014, 1-6
- **E.N. ALLINI et al.** Evaluation and monitoring of free running oscillators serving as source of Randomness. *IACR Transactions on Cryptographie Hardware and Embedded Systems I,* 2018, (3), 214-242